# EUROPÄISCHE PATENTSCHRIFT

(11) **EP 3 374 054 B1**
(45) Veröffentlichungstag und Bekanntmachung des Hinweises auf die Patenterteilung: **08.07.2020**
(21) Anmeldenummer: 16784498.4
(22) Anmeldetag: 20.10.2016
(51) Int. Cl.: B01D 46/24, F24C 15/20, B01D 46/00, B01D 46/10

(54) **DUNSTABZUGSVORRICHTUNG**
FUME EXTRACTION DEVICE
DISPOSITIF D'ASPIRATION DE FUMÉES

(30) Priorität: 10.11.2015 EP 15290287
(43) Veröffentlichungstag der Anmeldung: 19.09.2018
(73) Patentinhaber: BSH Hausgeräte GmbH, 81739 München (DE)
(72) Erfinder: CHARTREL, Aurélien, 67380 Lingolsheim (FR); HOFFBECK, Guillaume, 67530 Ottrott (FR); HYDIER, Priscilla, 67520 Marlenheim (FR)
(86) Internationale Anmeldenummer: PCT/EP2016/075232
(87) Internationale Veröffentlichungsnummer: WO 2017/080781

(56) Entgegenhaltungen:
- CH-A5- 571 367
- CN-Y- 200 979 232
- DE-T5-112006 003 707

## Beschreibung

Bei Dunstabzugsvorrichtungen, die insbesondere in Küchen eingesetzt werden, ist es bekannt, Filtervorrichtungen einzusetzen, mittels derer Fett und andere Verunreinigungen aus den in die Dunstabzugsvorrichtung eingesaugten Dünsten und Wrasen ausgefiltert werden. Die Filtervorrichtungen stellen beispielsweise sogenannte Filterkassetten dar, die aus mehreren parallel übereinander angeordneten Filterlagen, insbesondere Streckmetallfilterlagen bestehen, die in einem Rahmen gehalten sind. Eine solche Filterkassette ist beispielsweise in der DE10 2013 212 921 A1 beschrieben.

Weiterhin wird in der CH 571 367 A5 ein Fett- und Schmutzfanggitter für eine Küchendunstabzugshaube offenbart. In einem Ausführungsbeispiel ist offenbart, dass zwei Labyrinthfilterplatten mittels einer Klemmbefestigung lösbar an einem Rahmen befestigt. Zu diesem Zweck ist der Kragen an zwei gegenüberliegenden Seiten der Prallplatte rechtwinklig abgebogen, so dass sich ein Einklemmwinkel für die Labirinthfilterplatten ergibt. Mindestens die zweite Labyrinthfilterplatte ist aus elastischem Material hergestellt. Somit kann sie zum Einsetzen in den Rahmen durchgebogen werden und unter die Winkel geschoben werden.

In der CN 200979232 Y wird ein Ölfang einer Dunstabzugshaube offenbart, der zwei miteinander verbundene gebogene Prallplatten aufweist, die eine Vielzahl von Löchern aufweisen, durch die Ruß geleitet wird. Eine Ölfangkammer ist zwischen den zwei gebogenen Prallplatten ausgebildet. Zwischen den gebogenen Prallplatten ist außerdem ein Filtermedium angeordnet.

Weiterhin offenbart die DE 11 2006 003 707 T5 einen raumoptimierten Abscheider zum Koaleszieren eines Mediums mit zwei nichtvermischbaren Phasen, nämlich einer kontinuierlichen Phase und einer dispergierten Phase. Die kontinuierliche Phase fließt entlang einer Fließrichtung von stromaufwärts nach stromabwärts, wobei der Abscheider ein Abscheiderelement umfasst, das sich axial entlang einer Achse erstreckt und Abscheidermedien aufweist, die Tröpfchen der dispergierten Phase einfangen. Die Tröpfchen wachsen koaleszierend zu größeren Tropfen, die weiter koaleszieren und wachsen, um Pfützen zu bilden, die ablaufen. Das Element weist in einer Ebene quer zu der Achse eine geometrische Querschnittsgestalt mit geschlossener Schleife auf und eine innere Oberfläche, die einen inneren Hohlraum definiert, und weist eine äußere Oberfläche auf, die durch die Dicke des Elements zwischen der inneren und äußeren Oberfläche von der inneren Oberflache nach außen beabstandet ist.

Ein Nachteil herkömmlicher Filtervorrichtungen besteht darin, dass mit diesen Filtervorrichtungen der Fettabscheidegrad, beispielsweise durch Erhöhung der Anzahl an Streckmetalllagen, nur unter Inkaufnahme eines erhöhten Druckabfalls der Luft an der Filtervorrichtung erhöht werden kann. Dieser erhöhte Fettabscheidegrad kann daher nur durch Einsetzen eines stärkeren Gebläses genutzt werden.

Der Erfindung liegt daher die Aufgabe zugrunde, eine Lösung zu schaffen, durch die der Fettabscheidegrad einer Dunstabzugsvorrichtung auf einfache und zuverlässige Weise erhöht werden kann.

Der Erfindung liegt die Erkenntnis zugrunde, dass diese Aufgabe gelöst werden kann, indem eine Filtervorrichtung geschaffen wird, die bezüglich der Durchströmung von Luft optimiert ist und dennoch zur Aufnahme einer ausreichenden Menge von Fett und anderen Verunreinigungen geeignet ist.

Die Aufgabe wird daher gelöst durch eine Dunstabzugsvorrichtung, die zumindest ein Gehäuse mit zumindest einer Abluftöffnung und eine Filtervorrichtung umfasst, die zumindest eine Filtereinheit mit mindestens einem Filterelement umfasst. Die Dunstabzugsvorrichtung ist dadurch gekennzeichnet, dass das mindestens eine Filterelement einen Filterkörper umfasst, der Abstand zwischen gegenüberliegenden Außenseiten des Filterkörpers variiert und im Inneren des Filterkörpers zumindest ein Hohlraum gebildet ist, wobei der Filterkörper aus Filtermaterial besteht, die Außenseiten des Filterkörpers die Oberseite und die Unterseite des Filterkörpers sind und die Oberseite die Anströmseite und die Unterseite die Reinluftseite des Filterkörpers bilden. Die erfindungsgemäß verwendete Filtervorrichtung der Dunstabzugsvorrichtung umfasst erfindungsgemäß zumindest eine Filtereinheit mit mindestens einem Filterelement. Die Filtervorrichtung dient vorzugsweise für den Einsatz in einer Dunstabzugsvorrichtung, die in einer Küche eingesetzt wird. Die Filtervorrichtung dient weiterhin insbesondere zum Ausfiltern von Fett und anderen Verunreinigungen aus Dünsten und Wrasen. Die Filtervorrichtung kann daher auch als Fettfiltervorrichtung bezeichnet werden.

Als Filtereinheit wird der Teil der Filtervorrichtung bezeichnet, in der zumindest ein Filterelement, das aus einem Filtermaterial besteht, vorgesehen ist. Zusätzlich kann die Filtereinheit weitere Bauteile, wie beispielsweise Rahmenteile aufweisen. Die Filtereinheit und das Filterelement erstrecken sich vorzugsweise längs, das heißt stellen eine längliche Einheit beziehungsweise ein längliches Element dar.

Erfindungsgemäß umfasst das mindestens eine Filterelement einen Filterkörper. Das Filterelement kann zusätzlich zu dem Filterkörper noch weitere Bestandteile aufweisen, beispielsweise eine Außenlage. Als Filterkörper wird ein dreidimensionales Gebilde verstanden, das erfindungsgemäß aus Filtermaterial besteht. Die Form des Filterkörpers ist erfindungsgemäß derart, dass der Abstand zwischen gegenüberliegenden Außenseiten des Filterkörpers variiert. Die Außenseiten können auch als Außenwände bezeichnet werden. Die Außenseiten, zwischen denen der Abstand variiert, sind erfindungsgemäß die Oberseite und die Unterseite des Filterkörpers. Die Oberseite bildet im eingebrachten Zustand der Filtervorrichtung in einer Dunstabzugsvorrichtung erfindungsgemäß die Anströmseite des Filterelementes und die Unterseite die Abströmseite, die auch als Reinluftseite bezeichnet wird. Der Abstand zwischen den Außenseiten variiert erfindungsgemäß vorzugsweise über die Breite des Filterkörpers. Zusätzlich oder alternativ kann erfindungsgemäß der Abstand zwischen den Außenseiten aber auch über die Länge des Filterkörpers variieren. Als Breite wird hierbei der Abstand zwischen den Längsrändern der Oberseite beziehungsweise der Abstand zwischen den Längsrändern der Unterseite des Filterkörpers verstanden. Als Länge wird der Abstand zwischen Stirnseiten des Filterkörpers verstanden. Die Abmessung zwischen den Außenseiten des Filterkörpers, insbesondere zwischen der Oberseite und der Unterseite des Filterkörpers wird als Höhe des Filterkörpers verstanden. Die Höhe kann über die Breite und/oder die Länge variieren. Besonders bevorzugt variiert die Höhe des Filterkörpers aber nur in der Breitenrichtung und weist über die Länge einen gleichbleibenden Querschnitt auf. Besonders bevorzugt ist die Höhe des Filterkörpers, das heißt der Abstand zwischen den gegenüberliegenden Außenseiten, im mittleren Bereich der Breite des Filterkörpers größer als an den seitlichen Randbereichen der Breite.

Erfindungsgemäß ist im Inneren des Filterkörpers zumindest ein Hohlraum gebildet. Somit liegt bei der erfindungsgemäßen Filtervorrichtung im Inneren des Filterkörpers zumindest ein Bereich vor, in dem der Strömungswiderstand im Vergleich zu mindestens einer Außenseite des Filterelementes geringer ist. Der Bereich des verringerten Strömungswiderstandes kann ein Bereich sein, in dem in dem Filterkörper weniger Filtermaterial oder Filtermaterial einer geringeren Flächendichte vorliegt. In diesem Fall ist im Inneren des Filterkörpers eine Vielzahl von Hohlräumen gebildet. Vorzugsweise wird der Bereich des verringerten Strömungswiderstandes aber durch einen durchgehenden Hohlraum gebildet. Bei dieser Ausführungsform liegt kein Filtermaterial in dem Bereich des verringerten Strömungswiderstandes vor, der Hohlraum ist aber von Filtermaterial umgeben.

Als Strömungswiderstand wird in diesem Zusammenhang vorzugsweise der Strömungswiderstand bezeichnet, den das Filterelement und dabei beispielsweise der Filterkörper einer Luftströmung entgegen setzt, die über eine der Außenseiten in den Filterkörper eintritt und über die gegenüberliegende Außenseite des Filterkörpers wieder austritt. Der Filterkörper wird erfindungsgemäß im eingebauten Zustand bei Betrieb der Dunstabzugsvorrichtung vorzugsweise von der Oberseite angeströmt und die Luft tritt aus der Unterseite des Filterkörpers aus.

Die Außenseiten des Filterelementes, zwischen denen der Abstand variiert, können die Außenseiten des Filterkörpers darstellen. Es ist erfindungsgemäß aber auch möglich, dass die Außenseiten des Filterelementes durch ein weiteres Teil des Filterelementes, beispielsweise einer Außenlage, die den Filterkörper umgibt, gebildet werden.

Indem in der erfindungsgemäße verwendeten Filtervorrichtung, die zumindest eine Filtereinheit mit mindestens einem Filterelement umfasst, das wiederum mindestens einen Filterkörper umfasst, der Abstand zwischen gegenüberliegenden Außenseiten des Filterkörpers variiert und im Inneren des Filterkörpers zumindest ein Hohlraum gebildet ist, kann eine Reihe von Vorteilen erzielt werden.

Zum einen kann durch die Form des Filterkörpers, insbesondere durch die variierende Höhe des Filterkörpers zumindest über die Breite, ein gezieltes Einstellen der Luftdurchlässigkeit des Filterkörpers gegenüber einem Luftstrom, der auf eine Außenseite des Filterkörpers auftrifft und an der gegenüberliegenden Außenseite des Filterkörpers wieder austritt, erfolgen. Hierbei kann über die Breite des Filterkörpers eine gleichbleibender Strömungswiderstand eingestellt werden oder der Strömungswiderstand über die Breite variiert werden, beispielsweise in der Mitte geringer eingestellt sein, als an den seitlichen Randbereichen. Zudem es bei einem variierenden Abstand zwischen den gegenüberliegenden Außenseiten des Filterkörpers auf einfache Weise und bei einer geringen Gesamtgröße des Filterkörpers, insbesondere in dessen Randbereichen, möglich einen oder mehrere Hohlräume im Inneren des Filterkörpers zu erzeugen.

Weiterhin kann durch diese dreidimensionale Ausgestaltung des Filterkörpers ein optimaler Druckabfall an der Filtervorrichtung erzielt werden, der so gering ist, dass eine ausreichende Strömungsgeschwindigkeit von Luft durch das Filterelement gewährleistet werden kann und der dennoch groß genug ist, dass eine ausreichende Abscheidung von Verunreinigungen an dem Filterelement gewährleistet werden kann.

Durch die Schaffung zumindest eines Hohlraumes kann zum einen ein geringer Strömungswiderstand im dem Bereich des Hohlraumes geschaffen werden. Zudem können durch das Vorsehen zumindest eines Hohlraumes auch Verwirbelungen der Luft in dem oder den Hohlräumen in dem Filterkörper beim Durchströmen von Luft entstehen, durch die eine weiterer Abscheidung von Fett- und anderen Verunreinigungen aus der Luft begünstigt wird.

Gemäß einer bevorzugten Ausführungsform weist der Filterkörper einen rautenförmigen Querschnitt auf. Diese Ausführungsform weist den Vorteil auf, dass zum einen die Schaffung eines Hohlraumes in einem solchen Hohlkörper auf einfache Weise erfolgen kann. Zum anderen weist diese Form den Vorteil auf, dass das Filterelement, das zumindest diesen Filterkörper umfasst, auf einfache Weise in einer Dunstabzugsvorrichtung befestigt werden kann. Insbesondere können die durch die Rautenform gebildeten Kanten oder Ecken zum Aufliegen oder Anliegen an einem Gehäuse der Dunstabzugsvorrichtung oder einer Befestigungsvorrichtung genutzt werden. Schließlich ist eine solche Form eines Filterkörpers auf einfache Weise herstellbar.

Alternativ ist es aber auch möglich, dass der Filterkörper einen ovalen, insbesondere elliptischen Querschnitt aufweist. Diese Ausführungsform weist den Vorteil auf, dass hierdurch ein im Inneren des Filterkörpers gebildeter Hohlraum auch in den Randbereichen des Filterkörpers eine große Höhe aufweisen kann.

Schließlich ist es erfindungsgemäß auch möglich einen Filterkörper zu verwenden, der eine von einer Raute abweichenden Querschnitt aufweist. Beispielsweise kann der Filterkörper einen dreieckigen oder Querschnitt aufweisen.

Gemäß einer Ausführungsform umfasst das Filterelement zusätzlich zum Filterkörper eine Außenlage. Als Außenlage wird eine Schicht oder Lage bezeichnet, die die Außenseite des Filterelementes bildet. Die Außenlage kann beispielsweise eine Streckmetalllage darstellen. Die Außenlage umgibt den Filterkörper zumindest teilweise und liegt vorzugsweise an diesem an. Insbesondere bei Filtereinheiten, bei denen außer einem oder mehreren Filterelementen weitere Bauteile, wie beispielsweise Rahmenteile vorhanden sind, umgibt die Außenlage den Filterköper zumindest in den Bereichen, in denen keine Rahmenteile vorgesehen sind. Gemäß einer Ausführungsform besteht die Außenlage aus einem anderen Material als der Filterkörper. Hierdurch können durch den Filterkörper und die Außenlage unterschiedliche Funktionen ausgeführt werden. Beispielsweise kann die Außenlage, die beispielsweise aus einer Streckmetalllage besteht, zusätzlich zum Filtern der Luft dazu dienen, das Filtermaterial des Filterkörpers in Form zu halten beziehungsweise an einem Herausfallen aus der Filtereinheit zu hindern. Der Filterkörper kann hingegen neben der Filterung durch Ablagerung von Verunreinigungen an dem Filtermaterial aus dem dieser besteht, den mindestens einen Hohlraumes bilden.

Als Filtermaterial, aus dem der Filterkörper besteht, kann bei der erfindungsgemäße verwendeten Filtervorrichtung beispielsweise Metallgestrick, Metallgewirk, Metallgeflecht oder Metallvlies verwendet werden.

Der Vorteil dieser Arten von Filtermaterial besteht insbesondere in der großen Oberfläche im Inneren des Filtermaterials, die durch die einzelnen Metall- oder Drahtfasern oder Fäden erzeugt wird. Hierdurch kann ein hoher Fettabscheidegrad erzielt werden. Zudem kann bei diesen Arten von Filtermaterial durch die Dichte der Metall- oder Drahtfaser oder Fäden die Luftdurchlässigkeit gezielt und beispielsweise auch bereichsweise unterschiedlich eingestellt werden. Insbesondere bei einer Ausführungsform des Filterelementes, das eine Außenlage beispielsweise aus Streckmetall aufweist, ein Austreten oder Herausfallen einzelner Fasern oder Fäden verhindert werden.

Alternativ ist es auch möglich den Filterkörper aus einem Kunststoffvlies oder anderem Vliesmaterial herzustellen. Auch bei diesen Arten des Filtermaterials ist es vorteilhaft, wenn das Filterelement zusätzlich eine Außenlage umfasst. Die Außenlage kann hierbei beispielsweise als Stütze für das Material des Filterkörpers dienen.

Der Filterkörper kann aber beispielsweise auch aus Streckmetalllagen bestehen. In diesem Fall ist die äußere Streckmetalllage eine Außenlage, die sich nicht von dem Material des Filterkörpers unterscheidet. Da bei der erfindungsgemäß verwendeten Filtervorrichtung aber auch bei einer solchen Ausführungsform im Inneren des Filterkörpers ein Hohlraum gebildet ist, können auch hierbei die erfindungsgemäßen Vorteile erzielt werden. Zur Bildung des Hohlraumes kann der Filterkörper bei dieser Ausführungsform beispielsweise aus zwei Schalen bestehen, die jeweils aus mehreren Lagen von Streckmetall geformt sind und zwischen denen durch die Schalenform der Hohlraum im Inneren gebildet wird.

Gemäß einer Ausführungsform besteht der Filterkörper aus einer Körperwand, deren Materialstärke über den Umfang der Körperwand gleichbleibend ist. Insbesondere ist die Materialstärke bei dieser Ausführungsform vorzugsweise über den Umfang der Mantelfläche gleichbleibend. Die Materialstärke wird hierbei insbesondere als die senkrecht zu der Außenseite der Körperwand nach innen verlaufende Abmessung des Materials verstanden. Da erfindungsgemäß aber auch bei dieser Ausführungsform der Abstand zwischen den gegenüberliegenden Außenseiten des Filterkörpers variiert und vorzugsweise zur Mitte der Breite des Filterkörpers hin zunimmt, wird auch bei dieser Ausführungsform im Inneren des Filterkörpers ein Hohlraum gebildet. Dennoch weist diese Ausführungsform einer gleichbleibenden Materialstärke den Vorteil auf, dass der Strömungswiderstand, der zum Eintritt von Luft in das Innere des Filterkörpers und zum Austritt aus dem Inneren des Filterkörpers überwunden werden muss, über die Breite des Filterkörpers gleich bleibt.

Gemäß einer Ausführungsform weist die Körperwand einen äußeren Querschnitt und einen inneren Querschnitt auf, die konzentrisch zueinander angeordnet sind und der äußere Querschnitt stellt eine proportionale Vergrößerung des inneren Querschnitts dar. Bei dieser Ausführungsform wird damit ein Hohlraum im Inneren definiert, der einen Querschnitt aufweist, der eine proportionale Verkleinerung der Außenform des Querschnitts des Filterkörpers darstellt. Die Materialstärke kann hierbei über den Umfang des Filterkörpers entsprechend variieren.

Wie bereits oben erwähnt, kann die Filtereinheit einen Rahmen umfassen, der das Filterelement an zumindest einer Seite umgibt. Beispielsweise kann bei einem rautenförmigen Filterelement eine Rahmenleiste an einer Längskante des Filterelementes vorgesehen sein. Diese Rahmenleiste kann insbesondere bei einem Filterelement, das einen Filterkörper mit einer separaten Außenlage umfasst, zur Befestigung beziehungsweise zum Halten der Außenlage an dem Filterkörper dienen. Zusätzlich kann die Rahmenleiste in dem Zustand, in dem die Filtervorrichtung in ein Gehäuse einer Dunstabzugsvorrichtung eingebracht ist, auch als Abdichtung gegenüber dem Gehäuse dienen. Der Rahmen kann zusätzlich zu einer oder mehreren Rahmenleisten vorzugsweise auch zwei Rahmenkappen umfassen, durch die die offenen Stirnseiten des länglichen Filterelementes verschlossen werden. Die Rahmenkappen können durch den im Inneren des Filterkörpers gebildeten Hohlraum hindurch beispielsweise durch eine Verbindungsstange miteinander verbunden werden. Alternativ ist es aber beispielsweise auch möglich, die Rahmenkappen an der oder den Rahmenleisten, insbesondere des oder der Enden der Rahmenleisten zu befestigen.

Gemäß einer bevorzugten Ausführungsform umfasst die Filtervorrichtung mindestens eine Haltevorrichtung. Die Haltevorrichtung weist zumindest ein Positionierelement auf. Als Positionierelement wird ein Element verstanden, dass zumindest zum Positionieren der Filtereinheit bezüglich der Haltevorrichtung dient. Zusätzlich kann das Positionierelement aber auch zum Positionieren der Filtervorrichtung in einem Gehäuse einer Dunstabzugsvorrichtung dienen. Zusätzlich oder alternativ zu diesen beiden Funktionen des Positionierelementes kann das Positionierelement beispielsweise auch als Griffelement dienen, an dem die Haltevorrichtung angefasst und darüber aus einem Gehäuse der Dunstabzugsvorrichtung herausgenommen werden kann.

Das Positionierelement ist zu der Längsachse der Filtereinheit geneigt ausgerichtet. Vorzugsweise steht das Positionierelement senkrecht zu der Längsachse der Filtereinheit. Gemäß einer bevorzugten Ausführungsform stellt das Positionierelement ein stegförmiges Element dar, das beispielsweise die Form einer Finne aufweisen kann.

Indem das Positionierelement zu der Längsachse der Filtereinheit geneigt ausgerichtet ist und vorzugsweise senkrecht dazu steht, und vorzugsweise ein stegförmiges Element darstellt, kann zum einen die relative Position der Längsachse der Filtereinheit und damit der Filtereinheit zu der Haltevorrichtung durch das Positionierelement festgelegt werden. Indem das Positionierelement zudem ein stegförmiges Element darstellt, das vorzugsweise senkrecht zu der Längsachse der Filtereinheit steht, wird dennoch der Luftstrom durch die Filtereinheit von dem Positionierelement nicht oder nur geringfügig beeinträchtigt.

Die Haltevorrichtung ist vorzugsweise eine flächige Vorrichtung. Insbesondere weist die Haltevorrichtung eine Grundfläche auf, die den Boden der Haltevorrichtung bildet und beispielsweise zum Aufstellen der Haltevorrichtung auf dem Boden eines Gehäuses einer Dunstabzugsvorrichtung dient. Die Grundfläche der Haltevorrichtung ist vorzugsweise so groß, dass eine auf der Haltevorrichtung positionierte Filtereinheit in senkrechter Projektion auf die Haltevorrichtung, in der Grundfläche der Haltevorrichtung liegt. Hierdurch kann sichergestellt werden, dass Verunreinigungen, die aus der Filtereinheit abtropfende Verunreinigungen auf die Haltevorrichtung und insbesondere auf die Grundfläche gelangen.

Gemäß einer weiteren Ausführungsform umfasst die Haltevorrichtung eine Auffangschale, die im Folgenden auch als Auffangwanne bezeichnet wird. Die Auffangschale bildet vorzugsweise die Grundfläche der Haltevorrichtung. Hierdurch können Verunreinigungen in der Haltevorrichtung gesammelt werden.

Vorzugsweise ist an der Auffangschale zumindest das Positionierelement der Haltevorrichtung befestigt. Als befestigt wird hierbei auch ein Positionierelement verstanden, das mit der Auffangschale einteilig hergestellt ist, beispielsweise mit dieser zusammen spritzgegossen ist. Die Höhe des Positionierelementes ist höher als die Höhe der Auffangschale. Hierdurch kann der Benutzer, der die Haltevorrichtung über das Positionierelement anfasst, um dieses aus einem Gehäuse einer Dunstabzugsvorrichtung zu entfernen, das Positionierelement in einem Bereich angreifen, der oberhalb der Auffangschale liegt und an dem somit keine in der Auffangschale angesammelten Verunreinigungen anhaften.

Gemäß einer bevorzugten Ausführungsform weist die Haltevorrichtung zumindest eine Fixierrinne zur Aufnahme zumindest eines Teils der Filtereinheit auf. Die Fixierrinne ist vorzugsweise im Randbereich der Haltevorrichtung und insbesondere an einer Längsseite der Grundfläche der Haltevorrichtung angeordnet. Als Fixierrinne wird eine Rinne oder Nut bezeichnet, in der zumindest ein Teil der Filtereinheit aufgenommen werden kann. Beispielsweise kann in der Fixierrinne eine Rahmenleiste der Filtereinheit aufgenommen werden. Durch das Bereitstellen einer Fixierrinne an der Haltevorrichtung, kann somit die relative Position der Filtereinheit bezüglich der Haltevorrichtung festgelegt werden.

Besonders bevorzugt, weist das Positionierelement eine Führungskante auf. Die Führungskante bildet vorzugsweise die oberste Kante der Haltevorrichtung. Die Führungskante kann als Schräge oder als konkave Kurve ausgebildet sein. Durch diese Führungskante kann die Filtereinheit, die auf die Haltevorrichtung aufgesetzt wird, durch ihr Eigengewicht in eine definierte Endposition gebracht werden. Bei einer Ausführungsform, bei der eine Fixierrinne an der Haltevorrichtung vorgesehen ist, ist die Führungskante vorzugsweise zu der Fixierrinne hin geneigt. Dies bedeutet, dass eine Filtereinheit, die auf die Haltevorrichtung aufgebracht werden soll, entlang der Führungskante zu der Fixierrinne hin geführt wird und so eine genaue Positionierung der Filtereinheit an der Haltevorrichtung sichergestellt werden kann.

Gemäß einer Ausführungsform weist die Filtervorrichtung einen Vorsprung auf, der zu der Längsachse der Filtervorrichtung geneigt steht und über die Filtereinheit und/oder die Grundfläche der Haltevorrichtung an einer Seite zumindest teilweise hinausragt. Die Grundfläche der Haltevorrichtung, die auch als Stützfläche bezeichnet werden kann, die vorzugsweise die Auffangschale der Haltevorrichtung darstellen. Indem der Vorsprung an einer Seite der Filtereinheit oder der Grundfläche der Haltevorrichtung herausragt, kann der Vorsprung als Sicherungsmittel verwendet werden, um ein falsches Einbringen der Filtervorrichtung in ein Gehäuse einer Dunstabzugsvorrichtung zu verhindern. An dem Gehäuse kann eine entsprechende Aussparung vorgesehen sein, in die der Vorsprung eingreifen kann.

Besonders bevorzugt sind die Breite und die Länge der Filtervorrichtung, ohne den Vorsprung zu berücksichtigen, so groß, dass sie der Breite und der Länge des Gehäuses der Dunstabzugsvorrichtung entspricht, in das die Filtervorrichtung eingebracht werden soll. Durch diese Abmessungen kann ein sicherer Halt der Haltevorrichtung in dem Gehäuse der Dunstabzugsvorrichtung gewährleistet werden.

Die Aussparung, die in dem Gehäuse eingebracht ist und mit der der Vorsprung an der Filtervorrichtung zusammenwirken kann, ist vorzugsweise eine Abluftöffnung, über die Luft von dem Gehäuse zu dem Gebläse der Dunstabzugsvorrichtung gelangt. Diese Abluftöffnung, ist erfindungsgemäß vorzugsweise in einer Seitenwand des Gehäuses vorgesehen, da hierdurch die Bauhöhe der Dunstabzugsvorrichtung verringert ist. Das Filterelement der Filtervorrichtung muss diese die Abluftöffnung zuverlässig abdecken. Durch den vorgesehenen Vorsprung an der Filtervorrichtung kann dies auf einfache Weise gewährleistet werden. Insbesondere ist bei einer Filtervorrichtung deren Breite und Länge der Breite und Länge des Gehäuses entsprechen, nur möglich die Filtervorrichtung in der Ausrichtung in das Gehäuse einzubringen, in der der Vorsprung in die Abluftöffnung hineinragt. Ein um 180° verdrehtes Einbringen der Filtervorrichtung ist nicht möglich, da der Vorsprung ein solches Einbringen verhindert.

Der Vorsprung kann an der Filtereinheit oder an der Haltevorrichtung vorgesehen sein. Besonders bevorzugt ist der Vorsprung an einem Positionierelement an der Haltevorrichtung vorgesehen. Hierdurch wird die Störung des Luftstroms in dem Gehäuse minimiert. Zudem wird der Aufbau der Filtervorrichtung weiter vereinfacht.

Die Haltevorrichtung und die Filtereinheit können gemäß einer Ausführungsform lösbar miteinander verbunden sein. Bei dieser Ausführungsform besteht die Filtervorrichtung somit aus zwei separaten Teilen, nämlich der Haltevorrichtung und der Filtereinheit, die lösbar miteinander verbunden werden können. Diese Ausführungsform weist den Vorteil auf, dass die einzelnen Teile der Filtervorrichtung einzeln in ein Gehäuse einer Dunstabzugsvorrichtung eingebracht und aus diesem entnommen werden können. Bei dieser zweiteiligen Ausführungsform der Filtervorrichtung sind vorzugsweise eine Fixierrinne und ein Positionierelement, insbesondere mit einer Führungskante, an der Haltevorrichtung vorgesehen, um die relative Position der beiden Teile der Filtervorrichtung genau einhalten zu können und das Zusammensetzen der Filtervorrichtung vereinfachen zu können. Zudem ist ein Vorsprung zur Ausrichtung der Filtervorrichtung in dem Gehäuse bei dieser Ausführungsform vorzugsweise an der Haltevorrichtung vorgesehen, da diese als erstes in das Gehäuse eingebracht wird.

Gemäß einer alternativen Ausführungsform sind die Filtereinheit und die Haltevorrichtung zumindest teilweise unlösbar miteinander verbunden. Bei dieser Ausführungsform kann beispielsweise die Haltevorrichtung mit einem Rahmenteil der Filtereinheit, insbesondere einer Rahmenleiste, die in der Filtervorrichtung das untere Ende der Filtereinheit darstellt, fest verbunden sein und der Filterkörper und/oder weitere Rahmenteile über das Rahmenteil lösbar oder unlösbar mit der Haltevorrichtung verbunden sein. Diese Ausführungsform wird auch als einteilige Ausführungsform bezeichnet, da hierbei die Filtereinheit und die Haltevorrichtung zusammen als ein Montagebauteil in ein Gehäuse einer Dunstabzugsvorrichtung eingebracht und gemeinsam aus diesem entnommen werden können.

Vorteile und Merkmale, die bezüglich der Filtervorrichtung beschrieben wurden, gelten - soweit anwendbar - entsprechend für die Dunstabzugsvorrichtung und umgekehrt.

Als Dunstabzugsvorrichtung wird eine Vorrichtung bezeichnet, mittels derer Dünste und Wrasen, insbesondere in einer Küche, eingesaugt und gereinigt werden können. Gemäß einer bevorzugten Ausführungsform stellt die Dunstabzugsvorrichtung eine Vorrichtung dar, bei der in die Absaugöffnung der Dunstabzugsvorrichtung eingesaugte Dampf und / oder Wrasen nach unten geleitet und dort durch mindestens eine Filtervorrichtung gereinigt wird.

Die Dunstabzugsvorrichtung kann eine so genannte Downdraft-Haube sein, bei der die Ansaugöffnung vertikal hinter einer auch als Kochmulde bezeichneten Kochstelle angeordnet ist und von dort nach unten geleitet wird. Gemäß einer bevorzugten Ausführungsform stellt die Dunstabzugsvorrichtung aber eine Muldenlüftervorrichtung dar. Als Muldenlüftervorrichtung wird eine Dunstabzugsvorrichtung bezeichnet, bei der die Ansaugöffnung benachbart zu einer Kochmulde in der Horizontalen liegt. An diese Ansaugöffnung schließt sich nach unten ein Gehäuse der Dunstabzugsvorrichtung an, in der eine Filtervorrichtung vorgesehen ist, über die die Dünste und Wrasen gereinigt werden. Das Innere des Gehäuses ist über die Ansaugöffnung von oben zugänglich. An dem Gehäuse der Dunstabzugsvorrichtung ist eine Abluftöffnung vorgesehen, die über weitere Kanalelemente mit dem Gebläse der Dunstabzugsvorrichtung verbunden ist. Über die Abluftöffnung wird die durch die Filtervorrichtung gereinigte Luft aus dem Gehäuse ausgegeben. Die Abluftöffnung kann daher auch als Reinluftöffnung bezeichnet werden.

Bei einer Muldenlüftungsvorrichtung, die auch als Muldenlüfter bezeichnet wird, können die Vorteile der erfindungsgemäß verwendeten Filtervorrichtung besonders genutzt werden. Insbesondere steht bei einer Muldenlüftungsvorrichtung der gesamte Innenraum des Gehäuses, das sich an die Ansaugöffnung anschließt, zur Aufnahme einer Filtervorrichtung zur Verfügung. Zudem ist bei einem Muldenlüfter die Ansaugöffnung in der Höhe der Kochstelle oder dazu leicht nach oben versetzt vorgesehen und die Filtervorrichtung ist zu der Ansaugöffnung nach unten versetzt. Somit können Partikel, die aus der Filtervorrichtung und insbesondere der Filtereinheit herausfallen, nicht auf die Kochstelle fallen, wie dies bei einer über der Kochstelle angeordneten Dunstabzugshaube der Fall ist. Somit kann als Filtermaterial für den Filterkörper beispielsweise auch Metallgestrick oder Metallgewirk verwendet werden, obwohl es bei diesem Filtermaterial teilweise zum Ablösen von Metallfasern kommen kann. Weiterhin kann bei einer Muldenlüftung die Haltevorrichtung auf einfache Weise zum Sammeln von Verunreinigungen verwendet werden, da diese unterhalb der Filtereinheit angeordnet sein kann. Schließlich ist bei einer Muldenlüftung das Innere des Gehäuses der Dunstabzugsvorrichtung einfach zugänglich, so dass die in dem Gehäuse aufgenommene Filtervorrichtung auf einfache Weise eingebracht und entnommen werden kann.

Gemäß einer Ausführungsform der Dunstabzugshaube weist die Filtervorrichtung einen Vorsprung auf und ist so ausgerichtet, dass zumindest ein Teil des Vorsprungs in die

Abluftöffnung des Gehäuses der Dunstabzugsvorrichtung ragt. Der Vorsprung ragt bei dieser Ausführungsform in dem montierten, das heißt in das Gehäuse der Dunstabzugsvorrichtung eingebrachten Zustand der Filtervorrichtung, in die Abluftöffnung. Beim Einbringen der Filtervorrichtung in das Gehäuse dient der Vorsprung als Sicherheitselement, der ein falsches Einbringen der Filtervorrichtung verhindert. Bei dieser Ausführungsform der Dunstabzugsvorrichtung entspricht die Breite des Gehäuses vorzugsweise der Breite der Filtervorrichtung. Durch den über die Breite der Grundfläche der Haltevorrichtung oder der Filtereinheit im montierten Zustand seitlich herausragenden Vorsprung, ist dabei das Einbringen und damit die Montage der Filtervorrichtung nur in einer Ausrichtung möglich. Der Vorsprung kann an der Haltevorrichtung oder an der Filtereinheit angebracht sein. Bei einer zweiteiligen Ausführungsform der Filtervorrichtung ist der Vorsprung vorzugsweise an der Haltevorrichtung vorgesehen, da diese als erstes in das Gehäuse der Dunstabzugsvorrichtung eingebracht wird. Bei einer einteiligen Ausführungsform der Filtervorrichtung hingegen kann der Vorsprung alternativ oder zusätzlich an der Filtereinheit vorgesehen sein.

Die Filtereinheit ist bei der erfindungsgemäßen Dunstabzugsvorrichtung vorzugsweise so in dem Gehäuse angeordnet, dass diese die Abluftöffnung des Gehäuses vollständig abdeckt. Befindet sich die Abluftöffnung im Boden des Gehäuses kann die Filtereinheit hierzu in der Horizontalen liegen und die Fläche der Abluftöffnung in dem Boden abdecken. Bei dieser Ausführungsform weist die Filtervorrichtung vorzugsweise keine Haltevorrichtung auf. Vorzugsweise ist die Abluftöffnung aber in einer der Seitenwände des Gehäuses vorgesehen, hierbei kann die Filtereinheit vertikal in dem Gehäuse vorgesehen sein. Vorzugsweise liegt die Filtereinheit aber bei dieser Ausführungsform des Gehäuses zu der Vertikalen geneigt in dem Gehäuse.

Gemäß einer bevorzugten Ausführungsform liegt eine obere Kante der Filtereinheit an der Seitenwand des Gehäuses, in der die Abluftöffnung eingebracht ist, zum Abdichten an. Die Filtereinheit liegt vorzugsweise geneigt in dem Gehäuse. In dieser Ausführungsform liegt dann die untere Kante, die beispielsweise eine Seitenkante der Filtereinheit darstellt auf dem Boden oder im unteren Bereich des Gehäuses an diesem an. Der Vorteil, den diese Ausführungsform aufweist, ist, dass sich die Filtereinheit aufgrund des Eigengewichts in dem Gehäuse selber ausrichtet. Die Breite der Filtereinheit ist hierbei größer als die Breite des Gehäuses, so dass sich die geneigte Position der Filtereinheit ergibt. Die Seitenkante der Filtereinheit, die im eingebrachten Zustand die obere Kante darstellt, kann gemäß einer Ausführungsform eine Rahmenleiste des Rahmens der Filtereinheit darstellen.

Gemäß einer Ausführungsform ist die Haltevorrichtung unter der Filtereinheit angeordnet und die Haltevorrichtung liegt im unteren Bereich des Gehäuses der Dunstabzugsvorrichtung. Hierdurch kann die Haltevorrichtung neben der Funktion des Haltens der Filtereinheit auch die Funktion des Sammelns von Verunreinigungen ausführen. Hierzu weist die Haltevorrichtung bei dieser Ausführungsform vorzugsweise eine Auffangschale auf, die die Grundfläche der Haltevorrichtung bildet. Verunreinigungen, die von der darüber angeordneten Filtereinheit abtropfen oder herunterlaufen, gelangen so in die Auffangschale. Die Filtervorrichtung ist lösbar in das Gehäuse der Dunstabzugsvorrichtung eingebracht. Daher kann die Haltevorrichtung zusammen mit oder nach der Filtereinheit aus dem Gehäuse entnommen werden. Die Haltevorrichtung kann dann gereinigt werden. Insbesondere bei Ausführungsformen, bei denen die Filtervorrichtung einen Vorsprung aufweist, muss die Filtervorrichtung zum Entnehmen aus dem Gehäuse geneigt werden. Es ist daher vorteilhaft, wenn die Haltevorrichtung, insbesondere im Bereich einer Auffangwanne eine aufgeraute Oberfläche aufweist, durch die die Haftung der Verunreinigungen verbessert wird.

Die Erfindung wird im Folgenden anhand der beiliegenden Figuren erneut genauer erläutert. Hierbei zeigen:
- Figur 1:: eine schematische perspektivische Schnittansicht einer Ausführungsform der erfindungsgemäßen Dunstabzugsvorrichtung;
- Figur 2:: eine schematische Explosionsansicht einer Ausführungsform der Filtervorrichtung; und
- Figur 3:: eine schematische Schnittdarstellung einer Ausführungsform eines Filterkörpers.

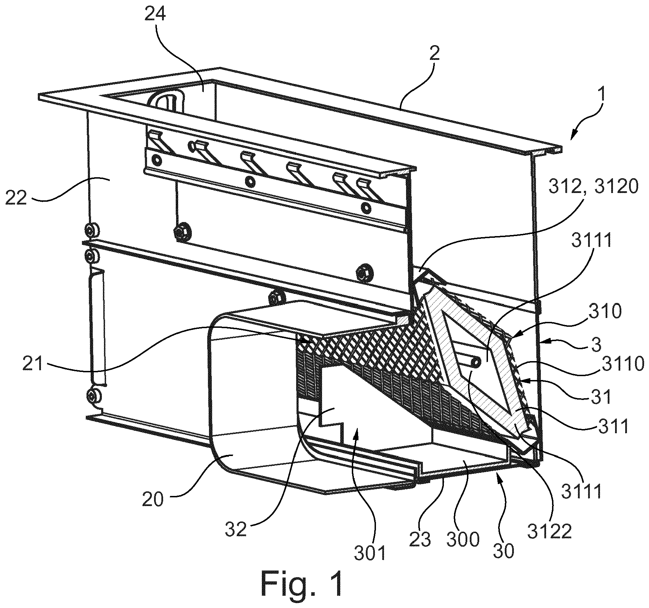

In Figur 1 ist eine schematisch, perspektivische Schnittansicht einer Ausführungsform der erfindungsgemäßen Dunstabzugsvorrichtung 1 gezeigt. Die Dunstabzugsvorrichtung 1 umfasst ein Gehäuse 2, eine Filtervorrichtung 3, sowie ein in der Figur 1 nicht gezeigtes Gebläse. Das Gehäuse 2 weist eine nach oben offene Kastenform auf. Die Oberseite des Gehäuses 2 kann zumindest zeitweise durch eine in Figur 1 nicht gezeigte Klappe oder Abdeckung zumindest zeitweise verschlossen werden. Das Gehäuse 2 weist eine längliche Form auf. Die Länge des Gehäuses 2 liegt in der eingebauten Position beispielsweise in der Tiefenrichtung einer Kochstelle (nicht gezeigt) und erstreckt sich somit neben der Kochstelle. Das Gehäuse 2 weist zwei Seitenwände 22 und zwei Stirnwände 24 auf, von denen in Figur 1 nur eine Stirnwand 24 zu sehen ist. In einer der Seitenwände 22 ist eine Abluftöffnung 21 im unteren Bereich eingebracht. An die Abluftöffnung 21 schließt sich nach außen ein Anschlussstutzen 20 an, der mit einem Kanal verbunden werden kann, über den gereinigte Luft zu dem Gebläse (nicht gezeigt) der Dunstabzugsvorrichtung 1 geleitet wird. In der dargestellten Ausführungsform erstreckt sich die Abluftöffnung 21 nur über einen Teil der Länge des Gehäuses 2. Es liegt aber auch im Rahmen der Erfindung, dass sich die Abluftöffnung 21 über die gesamte Länge des Gehäuses 2 erstreckt.

Im Inneren des Gehäuses 2 ist die Filtervorrichtung 3 angeordnet. Die Filtervorrichtung 3 besteht in der dargestellten Ausführungsform aus einer Filtereinheit 31 und einer Haltevorrichtung 30. Die Haltevorrichtung 30 liegt auf den Boden 23 des Gehäuses 2 auf. In der dargestellten Ausführungsform weist die Haltevorrichtung 30 eine Breite und eine Länge auf, die der Breite und der Länge des Gehäuses 2 entsprechen. Die Grundfläche der Haltevorrichtung 30 liegt somit an den deren Längsseiten an den Seitenwänden 22 des Gehäuses 2 und an deren Stirnseiten an den Stirnwänden 24 des Gehäuses 2 an. In der dargestellten Ausführungsform wird die Grundfläche der Haltevorrichtung 30 durch eine Auffangwanne 300 gebildet. Zudem ist in der dargestellten Ausführungsform an der Haltevorrichtung 30 ein Positionierelement 301 vorgesehen. Das Positionierelement 301 ist zu der Längsachse der Filtereinheit 31 der Filtervorrichtung 3 geneigt ausgerichtet. In der dargestellten Ausführungsform steht das Positionierelement 301 senkrecht zu der Längsachse der Filtereinheit 31 und erstreckt sich senkrecht vom der Grundfläche der Haltevorrichtung 1 nach oben. Das Positionierelement 301 stellt ein stegförmiges Element dar. Das Positionierelement 301 ist mit der Haltevorrichtung 30 einteilig ausgestaltet und ist insbesondere an der Auffangschale 300 der Haltevorrichtung 30 befestigt oder mit dieser zusammen hergestellt, beispielsweise durch Spritzguß.

In der gezeigten Ausführungsform ist ein Vorsprung 32 an der Filtervorrichtung 3 vorgesehen. Der Vorsprung 32 dient zur korrekten Montage der Filtervorrichtung 3 in dem Gehäuse 2 der Dunstabzugsvorrichtung 1. In der gezeigten Ausführungsform ist der Vorsprung an dem Positionierelement 301 vorgesehen und erstreckt sich von der Seitenkante des Positionierelementes 301 in Form einer Nase nach außen. Der Vorsprung ragt in die Abluftöffnung 21 des Gehäuses 2 herein und reicht bis in den Anschlussstutzen 20.

An einer Längskante der Haltevorrichtung 30, insbesondere der die Grundfläche bildenden Auffangwanne 300, ist in der dargestellten Ausführungsform eine Fixierrinne 302 vorgesehen. Diese ist in der dargestellten Ausführungsform in der Oberseite einer Seitenwand der Auffangwanne 300 gebildet. Die Fixierrinne 302 verläuft in der Längsrichtung der Haltevorrichtung 30 und ist zur Aufnahme eines Teils der Filtereinheit 31 vorgesehen.

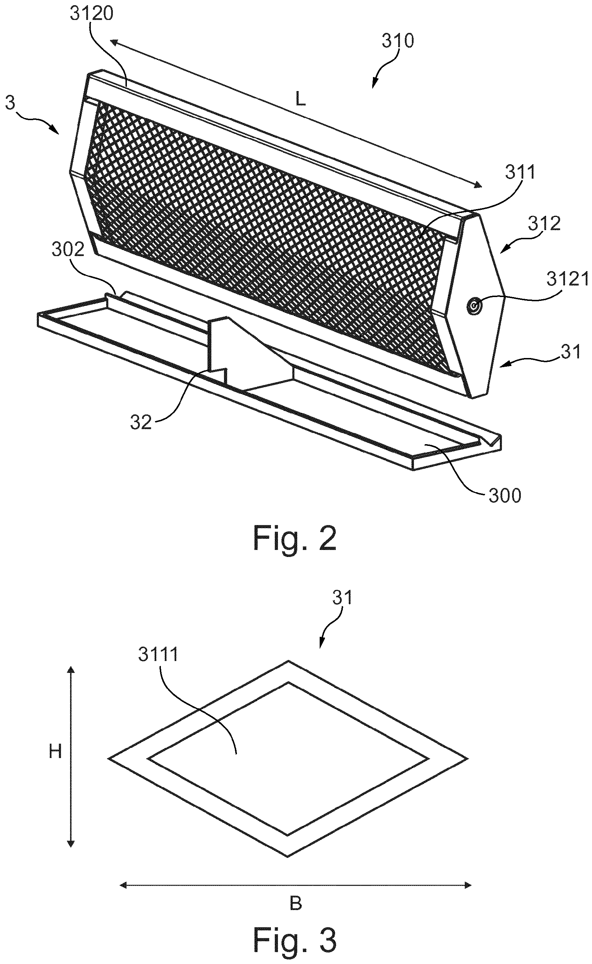

Die Filtereinheit 31 umfasst ein Filterelement 310. In der dargestellten Ausführungsform besteht das Filterelement 310 aus einem Filterkörper 311 mit einer Außenlage 3110 sowie einem Rahmen 312. Der Filterkörper 311 ist in der dargestellten Ausführungsform einen rautenförmigen Querschnitt auf. Bei dem Filterkörper 311, der das Filterelement bildet, variiert somit der Abstand zwischen den gegenüberliegenden Außenseiten des Filterkörpers 311. Wie sich aus der Darstellung in Figur 3 ergibt, variiert bei der gezeigten Ausführungsform die Höhe H des Filterkörpers 311 über dessen Breite B. Hierbei weist der Filterkörper 311 in der Mitte der Breite B des Filterkörpers 311 die größte Höhe auf.

Als Breite des Filterkörpers 311 wird die größte Abmessung bezeichnet, die zu der Länge des Filterkörpers 311 senkrecht steht. Die weitere Abmessung, die geringer als die Breite ist, wird bei dem Filterkörper 311 als Höhe bezeichnet. Die Höhe variiert in der Form, dass an den seitlichen Längsrändern die geringste Höhe vorliegt. Die Außenseiten des Filterelementes 31 werden bei der gezeigten Rautenform des Filterkörpers 311 jeweils durch eine V-Form gebildet, in der ein stumpfer Winkel eingeschlossen ist. Die Außenseite von der zumindest ein Schenkel der V-Form in dem in die Dunstabzugsvorrichtung eingebrachten Zustand nach oben gerichtet ist, stellt die Ansaugseite dar. Die gegenüberliegende Außenseite, die in der dargestellten Ausführungsform nach unten gerichtet ist, stellt die Reinluftseite dar. In dem Filterkörper 311 ist ein Hohlraum 3111 gebildet, der ebenfalls eine Rautenform aufweist.

Der Filterkörper 311 wird in der dargestellten Ausführungsform durch eine Körperwand gebildet. Die Materialstärke der Körperwand ist über den Umfang des Filterkörpers 311 gleich.

Aufgrund der Rautenform und der gleichbleibenden Materialstärke des Filtermaterials weist die Körperwand einen äußeren Querschnitt und einen inneren Querschnitt auf, die konzentrisch zueinander angeordnet sind und der äußere Querschnitt eine proportionale Vergrößerung des inneren Querschnitts darstellt.

In der Figur 1 ist der Filterkörper 311 als einteiliger Körper ausgebildet. Es liegt aber auch im Rahmen der Erfindung, dass der Filterkörper mehrteilig ausgestaltet ist, beispielsweise aus zwei v-förmigen Schalen (nicht gezeigt) besteht. Im Inneren des Filterkörpers 311 ist ein Hohlraum gebildet, der von dem Filtermaterial des Filterkörpers 311 umgeben ist. Der Hohlraum weist somit ebenfalls einen rautenförmigen Querschnitt auf und erstreckt sich über die Länge des Filterkörpers 311. Filterkörper 311 stellt somit einen rohrförmigen Hohlkörper mit einem rautenförmigen Querschnitt dar.

Die Filtereinheit 31 umfasst in der dargestellten Ausführungsform außer dem Filterkörper 311 zusätzlich eine Außenlage 3110. Die Außenlage 3110 umgibt hierbei den Filterkörper 311 zumindest teilweise und besteht aus einem anderen Material als der Filterkörper 311. Der Filterkörper 311 besteht beispielsweise aus einem Metallgestrick und die Außenlage 3110 wird beispielsweise durch eine Streckmetalllage gebildet. Zusätzlich zu Filterkörper 311 und Außenlage 3110 weist in der dargestellten Ausführungsform die Filtereinheit 31 einen Rahmen 312 auf, von dem in Figur 1 lediglich die beiden Rahmenleisten 3120 zu erkennen sind. Wie sich aus Figur 2 ergibt, erstrecken sich die Rahmenleisten 3120 entlang der seitlichen Ränder des Filterkörpers 311. Die Außenlage 3110 besteht in der dargestellten Ausführungsform aus zwei Teilen, die jeweils eine Schalenform aufweisen. Die Schalen werden durch den Rahmen 312 und insbesondere durch die Rahmenleisten 3120 gehalten. Der Rahmen 312 umfasst, wie sich aus Figur 2 ergibt, zusätzlich zu zwei Rahmenkappen 3121. Die Rahmenkappen 3121 decken die Stirnseiten des Filterkörpers 311 ab. Zudem halten die Rahmenkappen 3121 die Rahmenleisten 3120, die sich zwischen den Rahmenkappen 3121 erstrecken. Die Rahmenkappen 3121 sind in der dargestellten Ausführungsform über eine sich durch die Mitte des Filterkörpers 311 in Längsrichtung erstreckenden Verbindungsstange 3122 miteinander verbunden, insbesondere an dieser angeschraubt. Alternativ ist es aber auch möglich die Rahmenkappen 3121 auf andere Weise zu befestigen, beispielsweise an dem Filterkörper oder an den Rahmenleisten zu befestigen, beispielsweise zu verrasten.

Wie insbesondere in Figur 2 genauer zu erkennen ist, weist das Positionierelement 301 an einer Längsseite eine Fixierrinne 302 auf. Die Fixierrinne 302 ist in der Oberseite einer der Seitenwände der Auffangwanne 300 der Haltvorrichtung 30 ausgebildet und verläuft in der Längsrichtung der Haltevorrichtung 30. In dieser Fixierrinne 302 kann ein Teil der Filtereinheit 31 aufgenommen werden. Insbesondere kann eine der Rahmenleisten 3120 des Rahmens 312 der Filtereinheit 31 in die Fixierrinne 302 eingelegt werden. Die Form der Fixierrinne 302 kann zu diesem Zweck der Form der Rahmenleiste 3120 angepasst sein.

Das Positionierelement 301 weist eine Führungskante 3010 auf. Diese Führungskante 3010 stellt die obere Kante der Haltevorrichtung 30 dar. Die Führungskante 3010 ist in der dargestellten Ausführungsform als Schräge ausgebildet. Die Schräge erstreckt sich von dem obersten Punkt des Positionierelementes 301 zu der Seite der Auffangwanne 300, in der die Fixierrinne 302 ausgebildet ist. Die Form der Führungskante 3010 kann auch eine Kurve sein, beispielsweise eine konkave Kurve.

Im Folgenden wird nun das Einbringen der Ausführungsform der Filtervorrichtung 3, die in Figur 2 gezeigt ist, in die Dunstabzugsvorrichtung 1 beschrieben.

Als erster Schritt wird die Haltevorrichtung 30 in das Gehäuse 2 der Dunstabzugsvorrichtung 1 eingebracht und auf dem Boden 23 des Gehäuses 2 aufgesetzt. Bei diesem Einbringen wird die Haltevorrichtung 30 leicht um die Längsachse geneigt eingeführt, da der Vorsprung 32, der an der Haltevorrichtung 30 vorgesehen ist, über die Seite der Grundfläche der Haltevorrichtung 30 herausragt und somit ein Einführen mit horizontaler Ausrichtung der Grundfläche verhindert. Sobald der Vorsprung 32 beim Einführen in den Bereich der Abluftöffnung 21 gelangt, tritt dieser in die Abluftöffnung 21 und den sich daran anschließenden Anschlussstutzen 20 ein und die Haltevorrichtung 30 kann wieder in die horizontale Ausrichtung verschwenkt werden. In dieser Ausrichtung wird die Haltevorrichtung 30 bis auf den Boden 23 des Gehäuses 2 geführt. Der Benutzer, der die Filtervorrichtung 3 in das Gehäuse 2 einbringt, kann die Haltevorrichtung 30 insbesondere an dem Positionierelement 301 greifen.

Nachdem die Haltevorrichtung 30 auf dem Boden 23 des Gehäuses 2 abgesetzt ist, kann die Filtereinheit 31 in das Gehäuse 2 eingebracht werden. Hierbei wird die Filtereinheit 31 soweit in das Gehäuse 2 eingebracht, bis diese mit dem Positionierelement 301, insbesondere mit der Führungskante 3010 des Positionierelementes 301 in Kontakt kommt. Die Filtereinheit 31 kann so in das Gehäuse eingebracht werden, dass deren Breitenrichtung B in der Vertikalen liegt. Sobald die Seitenkante der Filtereinheit 31, in der dargestellten Ausführungsform die Rahmenleiste 3120, mit der Führungskante 3010 in Kontakt kommt, rutscht die Filtereinheit 31 aufgrund der Schwerkraft entlang der Führungskante 3010 nach unten. An das untere Ende der Führungskante 3010 schließt sich die Fixierrinne 302 der Haltevorrichtung 30 an. Die Filtereinheit 31 wird in dieser Position insbesondere über die Rahmenleiste 3120 an der Haltevorrichtung 30 gehalten. Je nach Tiefe der Fixierrinne 302 kann sich die Filtereinheit 31 zusätzlich noch an der Seitenwand 22 des Gehäuses 2, die neben der Fixierrinne 302 liegt, abstützen. Da der Filterkörper 311 der Filtereinheit 31 eine Höhe aufweist, die sich in der dargestellten Ausführungsform über die Breite der Filtereinheit 31 verändert und an den Seitenrändern die geringste Höhe aufweist, kommt bei einem Entlanggleiten der Filtereinheit 31 an der Führungskante 3010 der Bereich der Filtereinheit 31, der eine größere Höhe besitzt, in der dargestellten Ausführungsform der mittlere Bereich der Filtereinheit 31, mit der Seitenwand 22 des Gehäuses 2, die der Seitenwand 22, in der die Abluftöffnung 21 eingebracht ist, gegenüberliegt in Kontakt. Hierdurch erfolgt ein Verschwenken der Filtereinheit 31 aus der Vertikalen. Insbesondere schwenkt die Längsseite der Filtereinheit 31, die der Längsseite gegenüberliegt, die in der Fixierrinne 302 gehalten ist, soweit, bis diese an der Seitenwand 22, in der die Abluftöffnung 21 eingebracht ist, anliegt. In diesem Zustand liegt die Filtereinheit 31 vorzugsweise nur mit der einen Längsseite in der Fixierrinne 302 und gegebenenfalls der benachbarten Seitenwand an 22 und mit der anderen Längsseite an der Seitenwand 22, in der die Abluftöffnung 21 vorgesehen ist, an. Auf diese Weise kann sichergestellt werden, dass Luft, die von oben in das Gehäuse 2 eintritt, vollständig durch die Filtereinheit 31 und insbesondere das Filterelement 310 geleitet wird, bevor sie zu der Abluftöffnung 21 gelangt.

In den Figuren ist eine zweiteilige Filtervorrichtung gezeigt, bei der die Haltevorrichtung 31 separat zu der Filtereinheit 30 in das Gehäuse 2 der Dunstabzugsvorrichtung 1 eingebracht werden kann und auch separat entnommen werden kann. Alternativ ist es aber auch möglich, die Haltevorrichtung mit zumindest einem Teil der Filtereinheit einteilig auszugestalten. Beispielsweise kann an der Haltevorrichtung eine Rahmenleiste statt einer Fixierrinne ausgebildet sein und die Filterkörper mit der Rahmenleiste verbunden sein. Bei dieser einteiligen Ausgestaltung wird die Filtervorrichtung als eine Baueinheit in das Gehäuse eingebracht und aus diesem entnommen.

Mit der vorliegenden Erfindung wird somit eine Filtereinheit mit einer neuen Form geschaffen. Insbesondere kann die Filtereinheit eine Rautenform oder Rhombenform im Querschnitt aufweisen. Die Form der Filtereinheit kann bei dieser Ausführungsform auch als Parallelepiped bezeichnet werden. Zudem wird eine Filtervorrichtung geschaffen, die eine Haltevorrichtung umfassen kann und vorzugsweise umfasst, wobei die Haltevorrichtung zumindest teilweise zum Sammeln von Verunreinigungen dient.

Die vorliegende Erfindung weist eine Reihe von Vorteilen auf. Zum einen wird durch die neue Form der Filtereinheit zwischen Filterlagen des Filtermaterials eines Filterkörpers ein Hohlraum geschaffen. Hierdurch wird der Druckverlust verringert, da der freie Weg von Verunreinigungspartikeln in der Filtereinheit vergrößert wird. Dennoch kann eine größere Menge an Filtermaterial verwendet werden, wodurch die Effizienz der Dunstabzugsvorrichtung verbessert wird. Insbesondere wird die Fettabscheiderate auch bei geringen Leistungen des Gebläses der Dunstabzugsvorrichtung ermöglicht.

Durch die Auslegung der Filtervorrichtung kann zudem dafür gesorgt werden, dass die Filtervorrichtung stets korrekt in einem Gehäuse der Dunstabzugsvorrichtung positioniert wird. Insbesondere durch ein Positionierelement, das insbesondere als Finne, das heißt mit einer schrägen Oberkante ausgestaltet sein kann, wird die Positionierung der Filtereinheit in dem Gehäuse unterstützt. Zudem kann durch einen Vorsprung der Filtervorrichtung auch die Ausrichtung zu einer Abluftöffnung in dem Gehäuse der Dunstabzugsvorrichtung gewährleistet werden. Aufgrund der korrekten Positionierung kann ein Vorbeiströmen von verunreinigter Luft an der Filtervorrichtung verhindert werden und somit der Fettabscheidegrad maximiert werden.

Schließlich kann beim Vorsehen einer Haltevorrichtung, an oder in der weiterhin Fettpartikel oder andere Verunreinigungen abgeschieden werden können, der Fettabscheidegrad weiter gesteigert werden, da die Haltevorrichtung aus der Dunstabzugsvorrichtung entnommen und gereinigt werden kann.

## Patentansprüche

1. Dunstabzugsvorrichtung, die zumindest ein Gehäuse (2) mit zumindest einer Abluftöffnung (21) und eine Filtervorrichtung (3) umfasst, die zumindest eine Filtereinheit (31) mit mindestens einem Filterelement (310) umfasst, **dadurch gekennzeichnet, dass** das mindestens eine Filterelement (310) einen Filterkörper (311) umfasst, der Abstand zwischen gegenüberliegenden Außenseiten des Filterkörpers (311) variiert und im Inneren des Filterkörpers (311) zumindest ein Hohlraum (3111) gebildet ist, wobei der Filterkörper aus Filtermaterial besteht, die Außenseiten des Filterkörpers die Oberseite und die Unterseite des Filterkörpers sind und die Oberseite die Anströmseite und die Unterseite die Reinluftseite des Filterkörpers bilden.

2. Dunstabzugsvorrichtung nach Anspruch 1, **dadurch gekennzeichnet, dass** der Filterkörper (311) einen rautenförmigen, einen ovalen oder mehreckigen Querschnitt aufweist.

3. Dunstabzugsvorrichtung nach einem der Ansprüche 1 oder 2, **dadurch gekennzeichnet, dass** das Filterelement (310) zusätzlich zum Filterkörper (311) eine Außenlage (3110) umfasst, die den Filterkörper (311) zumindest teilweise umgibt und aus einem anderen Material als der Filterkörper (311) besteht.

4. Dunstabzugsvorrichtung nach einem der Ansprüche 1 bis 3, **dadurch gekennzeichnet, dass** der Filterkörper (311) zumindest teilweise aus Streckmetall, gewirktem Metall, Metallgestrick oder aus Vlies besteht.

5. Dunstabzugsvorrichtung nach einem der Ansprüche 1 bis 4, **dadurch gekennzeichnet, dass** der Filterkörper (311) aus einer Körperwand besteht, deren Materialstärke über den Umfang der Körperwand gleichbleibend ist.

6. Dunstabzugsvorrichtung nach einem der Ansprüche 1 bis 5, **dadurch gekennzeichnet, dass** der Filterkörper (311) einen äußeren Querschnitt und einen inneren Querschnitt aufweist, die konzentrisch zueinander angeordnet sind und der äußere Querschnitt eine proportionale Vergrößerung des inneren Querschnitts darstellt.

7. Dunstabzugsvorrichtung nach einem der Ansprüche 1 bis 6, **dadurch gekennzeichnet, dass** die Filtervorrichtung (3) mindestens eine Haltevorrichtung (30) umfasst, die zumindest ein Positionierelement (301) aufweist, das zu der Längsachse der Filtereinheit (31) geneigt, vorzugsweise senkrecht ausgerichtet ist und besonders bevorzugt ein stegförmiges Element darstellt.

8. Dunstabzugsvorrichtung nach Anspruch 7, **dadurch gekennzeichnet, dass** die Haltevorrichtung (30) eine Auffangwanne (300) umfasst und zumindest das Positionierelement (301) an der Auffangschale (300) befestigt ist.

9. Dunstabzugsvorrichtung nach einem der Ansprüche 7 oder 8, **dadurch gekennzeichnet, dass** die Haltevorrichtung (30) zumindest eine Fixierrinne (302) zur Aufnahme zumindest eines Teils der Filtereinheit (31) aufweist.

10. Dunstabzugsvorrichtung nach einem der Ansprüche 7 bis 9, **dadurch gekennzeichnet, dass** das Positionierelement (301) eine Führungskante (3010) aufweist, die vorzugsweise die obere Kante der Haltevorrichtung (30) bildet und besonders bevorzugt als Schräge oder als konkave Kurve ausgebildet ist.

11. Dunstabzugsvorrichtung nach einem der Ansprüche 7 bis 10, **dadurch gekennzeichnet, dass** die Filtervorrichtung (3) einen Vorsprung (32) aufweist, der zu der Längsachse der Filtervorrichtung (3) geneigt steht und über die Filtereinheit (31) und/oder eine Grundfläche der Haltevorrichtung (30) an einer Seite zumindest teilweise hinausragt.

12. Dunstabzugsvorrichtung nach einem der Ansprüche 7 bis 11, **dadurch gekennzeichnet, dass** die Haltevorrichtung (30) und die Filtereinheit (31) lösbar oder zumindest teilweise unlösbar miteinander verbunden sind.

13. Dunstabzugsvorrichtung nacheinem der Ansprüche 1 bis 12, **dadurch gekennzeichnet, dass** die Dunstabzugsvorrichtung (1) eine Muldenlüftervorrichtung darstellt.

14. Dunstabzugsvorrichtung nach einem der Ansprüche 1 bis 13, **dadurch gekennzeichnet, dass** die Filtervorrichtung (3) einen Vorsprung (32) aufweist und so ausgerichtet ist, dass zumindest ein Teil des Vorsprungs (32) in die Abluftöffnung (21) des Gehäuses (2) der Dunstabzugsvorrichtung (1) ragt.

15. Dunstabzugsvorrichtung nach einem der Ansprüche 1 bis 14, **dadurch gekennzeichnet, dass** die Filtereinheit (3) in dem Gehäuse (2) so angeordnet ist, dass diese die Abluftöffnung (21) des Gehäuses (2) vollständig abdeckt.

16. Dunstabzugsvorrichtung nach einem der Ansprüche1 bis 15, **dadurch gekennzeichnet, dass** eine obere Kante der Filtereinheit (31) an der Seitenwand (22) des Gehäuses (2), in der die Abluftöffnung (21) eingebracht ist, zum Abdichten anliegt, und die Filtereinheit (31) in dem Gehäuse (2) angeordnet ist.

17. Dunstabzugsvorrichtung nach einem der Ansprüche1 bis 16, **dadurch gekennzeichnet, dass** die Haltevorrichtung (30) unter der Filtereinheit (31) angeordnet ist und die Haltevorrichtung (30) im unteren Bereich des Gehäuses (2) der Dunstabzugsvorrichtung (1) liegt.

## Claims

1. Fume extraction device which comprises at least one housing (2) with at least one air extraction opening (21), and a filter device (3) which comprises at least one filter unit (31) with at least one filter element (310), **characterised in that** the at least one filter element (310) comprises a filter body (311), the distance between opposing outer sides of the filter body (311) varies and at least one cavity (3111) is formed in the interior of the filter body (311), wherein the filter body consists of filter material, the outer sides of the filter body are the upper side and the lower side of the filter body and the upper side forms the inflow side and the lower side the clean air side of the filter body.

2. Fume extraction device according to claim 1, **characterised in that** the filter body (311) has a diamond-shaped, oval or polygonal cross-section.

3. Fume extraction device according to one of claims 1 or 2, **characterised in that** the filter element (310) comprises, in addition to the filter body (311), an outer layer (3110) which at least partially surrounds the filter body (311) and consists of a different material from the filter body (311).

4. Fume extraction device according to one of claims 1 to 3, **characterised in that** the filter body (311) at least partially consists of expanded metal, knitted metal, metal mesh or fleece.

5. Fume extraction device according to one of claims 1 to 4, **characterised in that** the filter body (311) consists of a body wall, the material thickness of which is constant over the circumference of the body wall.

6. Fume extraction device according to one of claims 1 to 5, **characterised in that** the filter body (311) has an outer cross-section and an inner-cross section, which are arranged concentrically to one another and the outer-cross section represents a proportional increase of the inner cross-section.

7. Fume extraction device according to one of claims 1 to 6, **characterised in that** the filter device (3) comprises at least one retaining device (30) which has at least one positioning element (301) which is inclined to the longitudinal axis of the filter unit (31), is preferably oriented perpendicularly and particularly preferably represents a web-shaped element.

8. Fume extraction device according to claim 7, **characterised in that** the retaining device (30) comprises a collection trough (300) and at least the positioning element (301) is attached to the collection tray (300).

9. Fume extraction device according to one of claims 7 or 8, **characterised in that** the retaining device (30) has at least one fixing groove (302) for receiving at least part of the filter unit (31).

10. Fume extraction device according to one of claims 7 to 9, **characterised in that** the positioning element (301) has a guide edge (3010) which preferably forms the upper edge of the retaining device (30) and is particularly preferably embodied as a slope or as a concave curve.

11. Fume extraction device according to one of claims 7 to 10, **characterised in that** the filter device (3) has a projection (32) which is inclined to the longitudinal axis of the filter device (3) and protrudes over the filter unit (31) and/or a base area of the retaining device (30) at least partially on one side.

12. Fume extraction device according to one of claims 7 to 11, **characterised in that** the retaining device (30) and the filter unit (31) are detachably or at least partially non-detachably connected to one another.

13. Fume extraction device according to one of claims 1 to 12, **characterised in that** the fume extraction device (1) represents a hob ventilator device.

14. Fume extraction device according to one of claims 1 to 13, **characterised in that** the filter device (3) has a projection (32) and is oriented such that at least part of the projection (32) protrudes into the air extraction opening (21) of the housing (2) of the fume extraction device (1).

15. Fume extraction device according to one of claims 1 to 14, **characterised in that** the filter unit (3) is arranged in the housing (2) such that it completely covers the air extraction opening (21) of the housing (2).

16. Fume extraction device according to one of claims 1 to 15, **characterised in that** an upper edge of the filter unit (31) abuts the side wall (22) of the housing (2) in which the air extraction opening (21) is introduced, for sealing purposes, and the filter unit (31) is arranged in the housing (2).

17. Fume extraction device according to one of claims 1 to 16, **characterised in that** the retaining device (30) is arranged under the filter unit (31) and the retaining device (30) lies in the lower region of the housing (2) of the fume extraction device (1).

## Revendications

1. Dispositif d'aspiration de vapeur comprenant au moins un carter (2) avec au moins un orifice d'air vicié (21) et un dispositif de filtration (3), qui comprend au moins une unité filtrante (31) avec au moins un élément filtrant (310), **caractérisé en ce que** l'au moins un élément filtrant (310) comprend un corps de filtre (311), l'espacement entre des côtés extérieurs opposés du corps de filtre (311) varie et au moins une cavité (3111) est constituée à l'intérieur du corps de filtre (311), dans lequel le corps de filtre se compose d'un matériau filtrant, les côtés extérieurs du corps de filtre constituant le côté supérieur et le côté inférieur du corps de filtre, le côté supérieur constituant le côté du flux entrant et le côté inférieur constituant le côté air pur du corps de filtre.

2. Dispositif d'aspiration de vapeur selon la revendication 1, **caractérisé en ce que** le corps de filtre (311) présente une section rhomboïdale, ovale ou polygonale.

3. Dispositif d'aspiration de vapeur selon l'une des revendications 1 ou 2, **caractérisé en ce que** l'élément filtrant (310) comprend outre le corps de filtre (311) une couche extérieure (3110), qui entoure au moins partiellement le corps de filtre (311) et se compose d'un autre matériau que celui du corps de filtre (311).

4. Dispositif d'aspiration de vapeur selon l'une des revendications 1 à 3, **caractérisé en ce que** le corps de filtre (311) se compose au moins partiellement de métal déployé, maillé, de tricot métallique ou de matériau non tissé.

5. Dispositif d'aspiration de vapeur selon l'une des revendications 1 à 4, **caractérisé en ce que** le corps de filtre (311) se compose d'une paroi de corps dont l'épaisseur du matériau demeure constante sur l'étendue de la paroi de corps.

6. Dispositif d'aspiration de vapeur selon l'une des revendications 1 à 5, **caractérisé en ce que** le corps de filtre (311) présente une section extérieure et une section intérieure disposées de façon concentrique l'une par rapport à l'autre et la section extérieure représente un agrandissement proportionnel de la section intérieure.

7. Dispositif d'aspiration de vapeur selon l'une des revendications 1 à 6, **caractérisé en ce que** le dispositif de filtration (3) comprend au moins un dispositif de retenue (30), qui présente au moins un élément de positionnement (301), disposé de façon inclinée vers l'axe longitudinal de l'unité filtrante (31), de préférence à la verticale et représente de façon particulièrement préférée un élément en forme d'âme.

8. Dispositif d'aspiration de vapeur selon la revendication 7, **caractérisé en ce que** le dispositif de retenue (30) comprend un bac de rétention (300) et au moins l'élément de positionnement (301) est fixé au bac de rétention (300).

9. Dispositif d'aspiration de vapeur selon l'une des revendications 7 ou 8, **caractérisé en ce que** le dispositif de retenue (30) présente au moins une goulotte de fixation (302) pour l'accueil d'au moins une partie de l'unité filtrante (31).

10. Dispositif d'aspiration de vapeur selon l'une des revendications 7 à 9, **caractérisé en ce que** l'élément de positionnement (301) présente un bord de guidage (3010), qui constitue de préférence le bord supérieur du dispositif de retenue (30) et est exécuté de façon particulièrement préférée en oblique ou sous la forme d'une courbe concave.

11. Dispositif d'aspiration de vapeur selon l'une des revendications 7 à 10, **caractérisé en ce que** le dispositif de filtration (3) présente une saillie (32) inclinée vers l'axe longitudinal du dispositif de filtration (3) et faisant au moins partiellement saillie sur un côté via l'unité filtrante (31) et/ou une surface de base du dispositif de retenue (30).

12. Dispositif d'aspiration de vapeur selon l'une des revendications 7 à 11, **caractérisé en ce que** le dispositif de retenue (30) et l'unité filtrante (31) sont reliées l'une à l'autre de façon amovible ou au moins partiellement inamovible.

13. Dispositif d'aspiration de vapeur selon l'une des revendications 1 à 12, **caractérisée en ce que** le dispositif d'aspiration de vapeur (1) représente un dispositif de ventilation encastré.

14. Dispositif d'aspiration de vapeur selon l'une des revendications 1 à 13, **caractérisé en ce que** le dispositif de filtration (3) présente une saillie (32) et est orienté de telle sorte qu'au moins une partie de la saillie (32) s'élève dans l'orifice d'air vicié (21) du carter (2) du dispositif d'aspiration de vapeur (1).

15. Dispositif d'aspiration de vapeur selon l'une des revendications 1 à 14, **caractérisé en ce que** l'unité de filtration (3) est disposée de telle sorte dans le carter (2) que celle-ci couvre intégralement l'orifice d'air vicié (21) du carter (2).

16. Dispositif d'aspiration de vapeur selon l'une des revendications 1 à 15, **caractérisé en ce qu'**un bord supérieur de l'unité filtrante (31) est contigu à la paroi latérale (22) du carter (2), dans laquelle l'orifice d'air vicié (21) est introduit, pour l'étanchéifier, et l'unité de filtration (31) est disposée dans le carter (2).

17. Dispositif d'aspiration de vapeur selon l'une des revendications 1 à 16, **caractérisé en ce que** le dispositif de retenue (30) est disposé sous l'unité de filtration (31) et l'unité de retenue (30) se trouve dans la partie inférieure du carter (2) du dispositif d'aspiration de vapeur (1).
